# EUROPEAN PATENT SPECIFICATION

(11) **EP 4 191 481 B1**
(45) Date of publication and mention of the grant of the patent: **19.08.2026**
(21) Application number: 22193593.5
(22) Date of filing: 02.09.2022
(51) Int. Cl.: G06N 3/082, G06N 3/09, G06N 3/0464

(54) **METHOD AND APPARATUS WITH NEURAL NETWORK ARCHITECTURE SEARCH**
VERFAHREN UND VORRICHTUNG MIT SUCHE NACH NEURONALEM NETZWERK
PROCÉDÉ ET APPAREIL AVEC RECHERCHE D'ARCHITECTURE DE RÉSEAU DE NEURONES ARTIFICIELS

(30) Priority: 03.12.2021 KR 20210171979
(43) Date of publication of application: 07.06.2023
(73) Proprietor: Samsung Electronics Co., Ltd., Suwon-si 16677 (KR)
(72) Inventor: LEE, Wonhee, 16678 Suwon-si (KR)
(74) Representative: Arnold & Siedsma

(56) References cited:
- QIAN JIANG ET AL: "EH-DNAS: End-to-End Hardware-aware Differentiable Neural Architecture Search", ARXIV.ORG, CORNELL UNIVERSITY LIBRARY, 201 OLIN LIBRARY CORNELL UNIVERSITY ITHACA, NY 14853, 24 November 2021 (2021-11-24), XP091103648

## Description

### BACKGROUND

### 1. Field

The following description relates to searching for an optimal architecture of a neural network.

### 2. Description of Related Art

A typical neural architecture search may be one method of automatically searching for a potentially optimal architecture of a neural network for a given purpose. Such a neural network search for a potentially suitable structure and shape of an architecture of a neural network depend on the capabilities of the search to resolve a given problem through deep learning. The potentially optimal neural network may be generated by selecting and combining primitive operations including predefined operators and functions, which is also called a search space. An example of an operator may include convolution, pooling, concatenation, skip connection, and the like.

Although existing multiple-objective differentiable neural architecture search (NAS) methods may measure the total hardware resource of a network architecture by performing an operation on each layer and summing measured values, such method may not always accurately measure resources. That is, a sum of hardware resources of an operation of each layer may be different from hardware resources of a whole network. For example, each dedicated processor may have a different network implementation method such that a memory corresponding to the operation of each layer may be reused, and latency for the whole network computation may increase more than expected due to throttling effects that may occur in large computations regardless of latency not occurring in small computations. In addition, the existing methods may include non-differentiability in a process of selecting the operation of each layer, and in terms of network optimization, a forward non-differentiable operation may be used, and a backward differentiable operation may be used for approximation. Thus, consistency between such cases may not be maintained.

QIAN JIANG ET AL: "EH-DNAS: End-to-End Hardware-aware Differentiable Neural Architecture Search" relates to a differentiable model predicting the end-to-end hardware performance of neural network architectures for DNAS.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided a computing apparatus according to the appended claim 1.

The hardware resource prediction model may include a neural network configured to accept the parameters of the candidate architecture as inputs, to predict the second hardware resource of the neural network of the candidate architecture based on the parameters, and to output a hardware resource prediction value.

The processor may be configured to update the parameters of the candidate architecture to minimize the hardware resource loss.

The processor may be configured to determine a weighted sum of the neural network loss and the hardware resource loss as an optimization loss and to determine the target architecture to minimize the optimization loss.

The processor may be configured to determine the target architecture and target parameters to reduce the neural network loss and the hardware resource loss.

For each layer of the neural network, a corresponding candidate architecture may be determined by selecting a respective candidate operation from among candidate operations of a corresponding layer.

Information associated with the selected candidate operation may be input to the hardware resource prediction model.

The first hardware resources may include any one or any combination of a number of operations, and a processing time to operate the neural network with the candidate architecture.

The processor may be configured to determine an optimization loss comprising the neural network loss and the hardware resource loss, and determine the target architecture by selecting a target operation that minimizes the optimization loss from among candidate operations of each layer included in the neural network of the candidate architecture.

The processor may be configured to determine the neural network loss based on a difference between validation data and result data output by the neural network of the candidate architecture processing training data.

In another general aspect, there is provided a processor-implemented method for searching an optimal architecture of a neural network according to the appended claim 9. In another general aspect, there is provided a non-transitory computer-readable storage medium according to appended claim 15.

The hardware resource prediction module may include a neural network configured to accept the parameters of the candidate architecture as inputs, predict the second hardware resource of the neural network of the candidate architecture based on the parameters, and to output a hardware resource prediction value.

The determining of the target architecture may include determining the target architecture to minimize a weighted sum of the neural network loss and the hardware resource loss.

The determining of the target architecture may include determining the target architecture by selecting a target operation from among candidate operations of each layer included in the neural network of the candidate architecture.

The first and second hardware resource may include any one or any combination of a number of operations, and a processing time to operate the neural network of the candidate architecture.

Other features and aspects will be apparent from the following detailed description, the drawings, and the claims.

### BRIEF DESCRIPTION OF THE DRAWINGS

FIG. 1 illustrates an example system with for searching for an optimal architecture of a neural network.
FIG. 2 illustrates an example computing apparatus with search for an optimal architecture of a neural network.
FIG. 3 illustrates an example of a process of selecting an optimal target operation among candidate operations for each layer.
FIG. 4 illustrates an example of a search process for determining a target architecture for a neural network.
FIG. 5 illustrates an example of operations of a method with an optimal architecture searching for a neural network.
FIG. 6 illustrates an example of an electronic device.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third", A, B, C, (a), (b), (c), or the like may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in the examples described herein may also be referred to as a second member, component, region, layer, or section without departing from the teachings of the examples.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

As used herein, the singular forms "a", "an", and "the" are intended to include the plural forms as well, unless the context clearly indicates otherwise. As used herein, the term "and/or" includes any one and any combination of any two or more of the associated listed items. As used herein, the terms "include," "comprise," and "have" specify the presence of stated features, numbers, operations, elements, components, and/or combinations thereof, but do not preclude the presence or addition of one or more other features, numbers, operations, elements, components, and/or combinations thereof.

Unless otherwise defined, all terms used herein including technical or scientific terms have the same meanings as those generally understood consistent with and after an understanding of the present disclosure. Terms, such as those defined in commonly used dictionaries, should be construed to have meanings matching with contextual meanings in the relevant art and the present disclosure, and are not to be construed as an ideal or excessively formal meaning unless otherwise defined herein.

The use of the term "may" herein with respect to an example or embodiment (e.g., as to what an example or embodiment may include or implement) means that at least one example or embodiment exists where such a feature is included or implemented, while all examples are not limited thereto.

Hereinafter, examples will be described in detail with reference to the accompanying drawings. When describing the examples with reference to the accompanying drawings, like reference numerals refer to like components and a repeated description related thereto will be omitted.

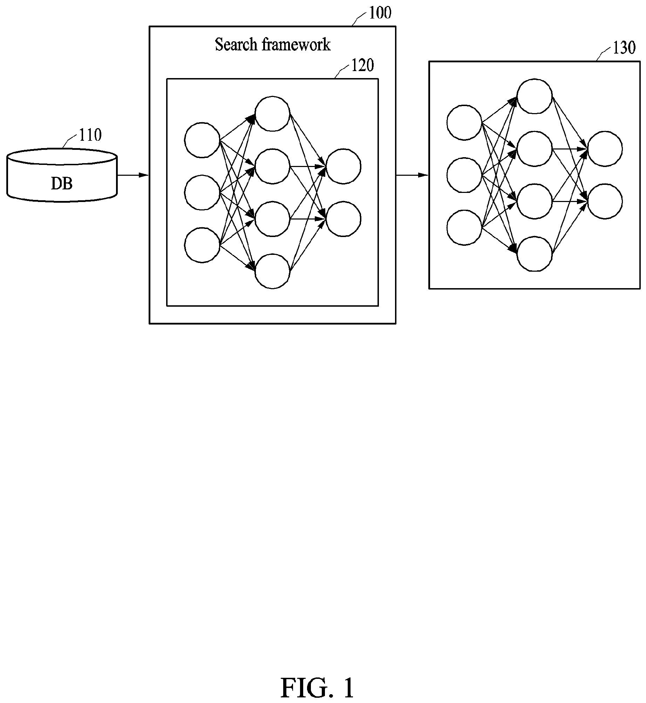

FIG. 1 illustrates an example of a system to search for an optimal architecture of a neural network.

The neural network or an artificial neural network (ANN) may generate mapping between input information and output information, and may have a generalization capability to infer a relatively correct output with respect to input information that has not been used for training. The neural network may refer to a general model that has an ability to solve a problem or perform tasks, as non-limiting examples, where nodes form the network through connections and other parameter adjustment through training.

The neural network may be implemented as an architecture having a plurality of layers including an input layer, hidden information and layers, and an output. In the neural network layer, an input image or map may be convoluted with a filter called a kernel, and as a result, a plurality of feature maps may be output. The output feature maps may be again convoluted in a subsequent convolutional layer as input feature maps with another kernel, and a plurality of new feature maps may be output. After the convolution operations are repeatedly performed, and potentially, other layer operations performed, the recognition or classification results of features of the input image through the neural network may be finally output, as non-limiting examples.

The neural network may be a machine learning model structure. In another example, a neural network layer may extract feature data from input data and provide an inference based on the feature data. The feature data may also be data associated with a feature obtained by abstracting input data. The neural network may map input data and output data in a nonlinear relationship based on deep learning, to generate such inferences. Deep learning, such as, through back propagation for multiple hidden layers of a neural network may generate a trained neural network for various purposes or tasks, such as speech recognition or speech transliteration from a big data set, may map input data and output data to each other through supervised and/or unsupervised learning, as only examples.

In an example, training an artificial neural network may indicate determining and adjusting weights and biases between layers or weights and biases among a plurality of nodes belonging to different layers adjacent to one another, as only non-limiting examples of such parameters.

Referring to FIG. 1, a system 100 may be a hardware-based framework configured to search for an optimal architecture (or a neural network structure) for a basic neural network 120 through machine learning. The basic neural network 120 may be a neural network yet to be trained (or an untrained neural network), in which an operation and a parameter (e.g., a connection weight) for each layer are not determined. The basic neural network 120 may include a plurality of neural network layers (or simply "layers"). In an example, the basic neural network 120 may be, for example, a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more thereof, but examples thereof are not limited to the foregoing examples. The basic neural network 120 may include a hardware structure that may be implemented through execution of instructions by a processor.

The system 100 may perform machine learning on the basic neural network 120 based on training data stored in a database (DB) 110. In the example of FIG. 1, machine learning may be performed by a supervised learning or partially supervised learning method.

In an example, the system 100 may train the basic neural network 120 through supervised learning. The system 100 may perform training based on an adjustment algorithm (e.g., a stochastic gradient descent scheme) and a loss function. The training data used for the training may include input data to be input to the neural network and validation data (or ground truth) corresponding to the input data. The basic neural network 120 may process the input data included in the training data to output result data. The system 100 may determine a neural network loss based on a comparison result between the validation data and the result data output from the basic neural network 120 and may search for an optimal architecture that minimizes the neural network loss.

The system 100 may search for the optimal architecture for a target neural network 130 by performing a multi-objective neural architecture search (NAS) method. The system 100 may not sample an architecture of the basic neural network 120. The system 100 may set multiple candidate operations for each layer of the basic neural network 120, select the most suitable candidate operation among such candidate operations, and search for the optimal architecture. Through such a search method, the system 100 may perform efficient optimization of the neural network and save time, energy, and computing resources.

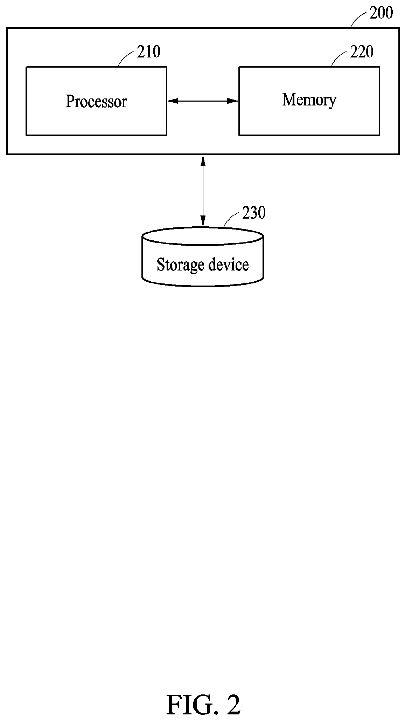

The system 100 may output the target neural network 130 having the optimal architecture based on a given purpose (e.g., object classification, object recognition, voice recognition, etc.) through a training process. Searching for an optimal architecture may include determining an operation performed by each layer of the neural network and determining optimal values of parameters of the neural network. The system 100 may be executed by an apparatus for searching for the optimal architecture of the neural network (e.g., a computing apparatus 200 in FIG. 2) described herein.

In an example, the system 100 may consider a hardware resource constraint when searching for an optimal architecture for the target neural network 130. The system 100 may perform optimization considering a hardware resource that is used when the neural network is executed and a validation loss for a task performed by the neural network. The system 100 may search for the target neural network 130 considering the hardware resource needed to operate the neural network. The hardware resource may be, for example, power consumption, memory demand, the number of operations (e.g., the number of multiply-accumulate (MAC) operations), a processing time, and a graphics processing unit (GPU) occupancy. The system 100 may consider one or more hardware resources, and in addition to the hardware resources described above, any hardware resource that may be observed numerically may be considered without limitation.

When a candidate architecture for the basic neural network 120 is determined, the system 100 may determine the neural network loss of the candidate architecture and a hardware resource loss of the hardware resources and may search for a target architecture that minimizes the neural network loss and the hardware resource loss. The neural network loss and the hardware resource loss may include an optimization loss for determining the target architecture.

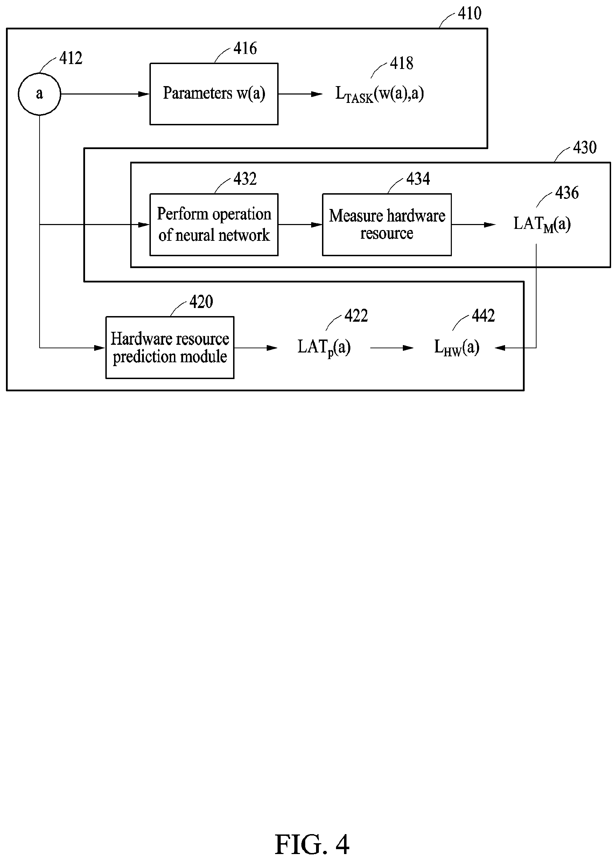

When the hardware resource loss is to be determined, the system 100 may determine the hardware resource loss based on a prediction value of the hardware resource output using an actual measurement value of the hardware resource needed by the neural network of the candidate architecture and a hardware resource prediction module, such as, a hardware resource prediction module 420 in FIG. 4. To be described in detail hereinafter, the hardware resource prediction module is a hardware module to provide prediction values that predict hardware resource for the neural network of a candidate architecture, for various training targets. The hardware resource prediction module may be implemented by a trained neural network to output prediction values for hardware resources needed by the neural network of a candidate architecture based on input parameters of the candidate architecture, such as by a processor representing the hardware resource prediction module, or any other processor herein. The hardware resource prediction module may have a differentiable characteristic, and differentiability may be maintained in a search process through the hardware resource prediction module. In an example, when the differentiability is maintained, an example end-to-end learning may be performed. The system 100 may reflect the hardware resource for the architecture of the neural network in an optimization loss through the hardware resource prediction module.

As described above, the system 100 may search for the optimal architecture of the neural network considering the hardware resource constraint and may perform optimization in a short period of time. In addition, the system 100 may search for the optimal architecture considering an actual hardware resource measurement value.

FIG. 2 illustrates an example of a structure of a computing apparatus to search for an optimal architecture of a neural network.

Referring to FIG. 2, the computing apparatus 200 may be a device to search for an optimal architecture for a neural network and may execute the system 100 described with reference to FIG. 1. The computing apparatus 200 may perform one or more operations described or illustrated herein in relation to a data processing method. The computing apparatus 200 may include a processor 210 and a memory 220. A storage device 230 may store data (e.g., training data) for an architecture search and a neural network used for the training.

The memory 220 may store a variety of data used by components (e.g., the processor 210) of the computing apparatus 200. A variety of data may include, for example, computer-readable instructions and input data or output data for an operation related thereto. The memory 220 may include any one or any combination of a volatile memory and a non-volatile memory.

The volatile memory device may be implemented as a dynamic random-access memory (DRAM), a static random-access memory (SRAM), a thyristor RAM (T-RAM), a zero capacitor RAM (Z-RAM), or a twin transistor RAM (TTRAM).

The non-volatile memory device may be implemented as an electrically erasable programmable read-only memory (EEPROM), a flash memory, a magnetic RAM (MRAM), a spin-transfer torque (STT)-MRAM, a conductive bridging RAM(CBRAM), a ferroelectric RAM (FeRAM), a phase change RAM (PRAM), a resistive RAM (RRAM), a nanotube RRAM, a polymer RAM (PoRAM), a nano floating gate Memory (NFGM), a holographic memory, a molecular electronic memory device), or an insulator resistance change memory. Further details regarding the memory 220 is provided below.

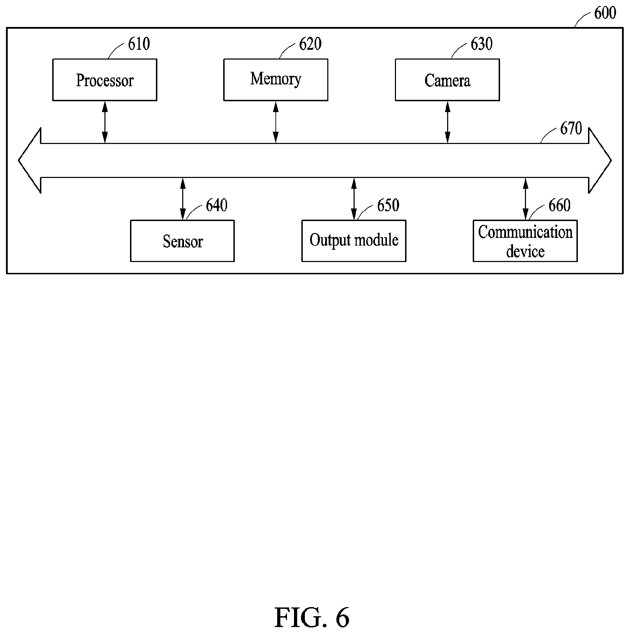

The processor 210 may control an overall operation of the computing apparatus 200 and may execute corresponding processor-readable instructions for performing operations of the computing apparatus 200. The processor 210 may execute, for example, software, to control one or more hardware components, such as other components described below in FIG. 6, of the computing apparatus 200 connected to the processor 210 and may perform various data processing or operations, and control of such components.

In an example, as at least a part of data processing or operations, the processor 210 may store instructions or data in the memory 220, execute the instructions and/or process data stored in the memory 220, and store resulting data obtained therefrom in the memory 220. The processor 200 may be a data processing device implemented by hardware including a circuit having a physical structure to perform desired operations. For example, the desired operations may include code or instructions included in a program.

The hardware-implemented data processing device may include, for example, a main processor (e.g., a central processing unit (CPU), a field-programmable gate array (FPGA), or an application processor (AP)) or an auxiliary processor (e.g., a GPU, a neural processing unit (NPU), an image signal processor (ISP), a sensor hub processor, or a communication processor (CP)) that is operable independently of, or in conjunction with the main processor. Further details regarding the processor 210 is provided below.

The processor 210 may read/write neural network data, for example, text data, voice data, image data, feature map data, kernel data, biases, weights, for example, connection weight data, hyperparameters, and other parameters etc., from/to the memory 220 and implement a neural network using the read/written data. When the neural network is implemented, the processor 210 may repeatedly perform operations between an input and parameters, in order to generate data with respect to an output. Here, in an example convolution layer, a number of convolution operations may be determined, depending on various factors, such as, for example, the number of channels of the input or input feature map, the number of channels of the kernel, a size of the input feature map, a size of the kernel, number of the kernels, and precision of values. Such a neural network may be implemented as a complicated architecture, where the processor 210 performs convolution operations with an operation count of up to hundreds of millions to tens of billions, and the frequency at which the processor 210 accesses the memory 220 for the convolution operations rapidly increases.

The processor 210 may learn a candidate architecture of a neural network (e.g., the basic neural network 120 in FIG. 1) using the training data and may determine a neural network loss. The neural network yet to be trained may include a plurality of layers each including one or more nodes, and candidate operations that may be performed by each layer may be predefined. The candidate operations may include, for example, a 3X3 kernel-based convolution operation, a 5X5 kernel-based convolution operation, and a pooling operation, but are not limited thereto. For each layer of the neural network, a candidate architecture may be determined by selecting any one of the candidate operations of each layer. The processor 210 may determine the neural network loss based on parameters for the candidate architecture of the neural network. The processor 210 may determine the neural network loss based on a difference between result data and validation data output by processing the training data of the neural network of the candidate architecture. The neural network losses may be determined by a loss function. **In** an example, the loss functions may be defined in advance.

The processor 210 may measure hardware resources needed (or used) to operate the neural network of the candidate architecture. A measured hardware resource may include, for example, one or more of power consumption, memory demand, the number of operations, and a processing time when the neural network of the candidate architecture operates, but is not limited thereto. The processor 210 may measure the hardware resource to determine a hardware resource measurement value.

The processor 210 may predict the hardware resource that would be needed when the neural network of the candidate architecture operates using a hardware resource prediction module, such as, for example, the hardware resource prediction module 420 in FIG. 4. The hardware resource prediction module may include a model, for example, a machine learning model, such as be a neural network that receives parameters of the candidate architecture (e.g., information associated with a candidate operation selected from candidate operations of each layer) as an input and may output a resource prediction value by predicting the hardware resource of the neural network of the candidate architecture based on the input parameters.

The processor 210 may determine a hardware resource loss based on the measured hardware resource and the predicted hardware resource. The processor 210 may determine the hardware resource loss based on a difference between the measured hardware resource and the predicted hardware resource as well as a loss function. For example, when a neural network of a candidate architecture operates, the processor 210 may determine a hardware resource loss by applying a difference between an actual processing time measurement value and an expected processing time value output from a hardware resource prediction model to the loss function.

The processor 210 may determine a target architecture of the neural network based on the neural network loss and the hardware resource loss. The processor 210 may determine the target architecture and target parameters for reducing the neural network loss and the hardware resource loss. The processor 210 may update the parameters of the candidate architecture such that the hardware resource loss is minimized, e.g., minimized in a direction towards smaller or minimal loss, or otherwise based on a minimal threshold, as non-limiting examples. The processor 210 may determine an optimization loss including the neural network loss and the hardware resource loss and may select a target operation that minimizes the optimization loss among candidate operations of each layer included in the neural network of the candidate architecture. The processor 210 may select the target operation of each layer that minimizes the neural network loss and the hardware resource loss of the entire neural network and may update the parameters of the neural network. The processor 210 may determine the candidate architecture and a weighted sum of the neural network loss, based on the parameters of the candidate architecture, and the hardware resource loss based on the parameters of the candidate architecture, as the optimization loss and may determine the target architecture that minimizes the optimization loss.

The operations performed by the computing apparatus 200 described above may be variously applied to neural network-based algorithms that may operate in embedded systems as well as mobile devices (e.g., wearable devices, smartphones, etc.)

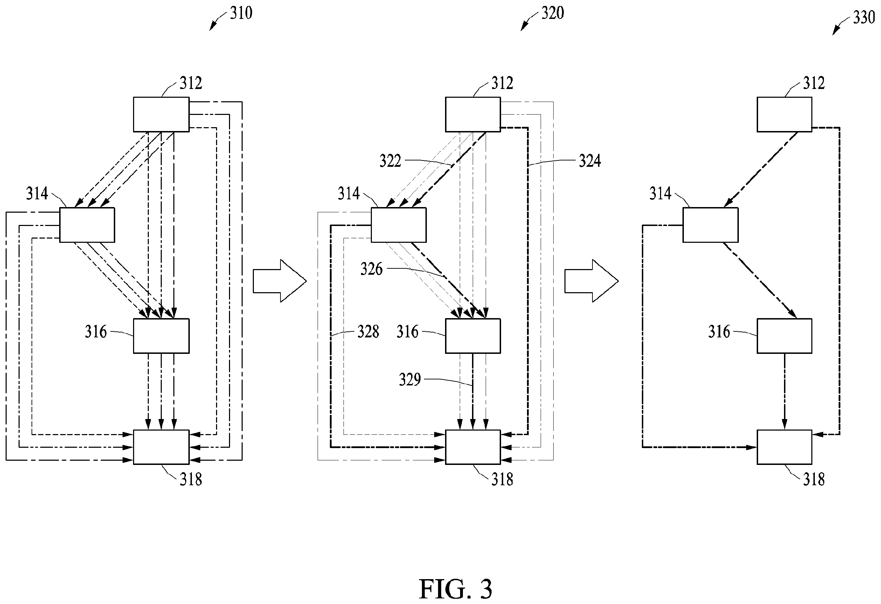

FIG. 3 illustrates an example of a process of selecting an optimal target operation among candidate operations for each layer.

Referring to FIG. 3, in operation 310, a neural network that is yet to be trained (e.g., the basic neural network 120 in FIG. 1) may include a plurality of layers 312, 314, 316, and 318, and multiple candidate operations that may be defined for each of the layers 312, 314, 316, and 318. **In** an example, a neural network may have three candidate operations for each of the layers 312, 314, 316, and 318. Candidate operations performed between layers may have different operation methods. For example, the candidate operations performed between the layer 312 and the layer 314 may be different types of operations.

A computing apparatus (e.g., the computing apparatus 200 in FIG. 2) may select a target operation that is an optimal candidate operation among the candidate operations in a training process. **In** operation 320, the computing apparatus may select any one of the candidate operations 322, 324, 326, 328, and 329 among the candidate operations for each of the layers 312, 314, 316, and 318, and may determine an optimization loss for a candidate architecture formed by a combination of the selected candidate operations 322, 324, 326, 328, and 329. In a search space, the computing apparatus may combine the candidate operations of each of the layers 312, 314, 316, and 318 multiple times and may calculate the optimization loss in each combination to minimize the optimization loss (or the target operation). In operation 330, when the training process for various combinations is complete, a target architecture may be determined based on a target operation that is selected for each of the layers 312, 314, 316, and 318. The target architecture may include a target operation for each layer.

FIG. 4 illustrates an example of a search process for determining a target architecture of a neural network.

Referring to FIG. 4, when a candidate architecture "a" 412 of a neural network is given in a search process of a target architecture of the neural network, parameters w(a) 416 of the candidate architecture "a" 412 may be determined. The candidate architecture "a" 412 may represent a neural network structure including a set of candidate operations that are selected for each layer.

Parameters of the candidate architecture "a" 412 may include a parameter for a selected candidate operation among candidate operations of each layer of the neural network and a parameter indicating an operation characteristic for each selected candidate operation. For example, assuming that the candidate operations of a layer included in the neural network include a 3X3 kernel-based convolution operation and a 5X5 kernel-based convolution operation, the parameters of the candidate architecture "a" 412 may include a parameter indicating which convolution operation is selected among the convolution operations and a kernel parameter of the selected convolution operation. Here, a convolution operation may be implemented by a convolution layer.

A computing apparatus (e.g., the computing apparatus 200 in FIG. 2) may determine a neural network loss L_{TASK}(w(a), a) 418 for a task of the neural network of the candidate architecture "a" 412 based on the parameters w(a) 416. The neural network loss L_{TASK}(w(a), a) 418 may be a loss for minimizing a loss of the task performed by the neural network. The neural network loss L_{TASK}(w(a), a) 418 may be a supervised or unsupervised validation-based loss.

In operation 432, the computing apparatus may perform operations using the neural network having the candidate architecture "a" 412 and in operation 434, the computing apparatus may actually measure a hardware resource of a whole neural network needed in a process of performing the corresponding operation. The hardware resource to be measured may include, for example, power consumption, memory demand, the number of operations, a processing time, and the like. When the hardware resource is measured in operation 434, a hardware resource measurement value LAT_{M}(a) 436 for the candidate architecture "a" 412 may be determined. In an example, the hardware resource may be measured by performing a neural network operation on an architecture determined through a max operation. Since a process 430 including such processes does not have differentiability, a forward operation and backward operation definition for a process 430 may not be determined. To resolve such an issue, the hardware resource prediction module 420 may be used.

The computing apparatus may predict the hardware resource of the whole neural network to be needed when the neural network having the candidate architecture "a" 412 using the hardware resource prediction module 420 performs an operation. A hardware resource prediction value LAT_{P}(a) 422 of the candidate architecture "a" 412 may be determined through the hardware resource prediction module 420. The hardware resource prediction module 420 may receive parameters of the candidate architecture "a" 412 as an input, predict the hardware resource of the neural network of the candidate architecture "a" 412 based on the input parameters, and may output the hardware resource prediction value LAT_{P}(a) 422. The operation in the hardware resource prediction module 420 may be performed as a differentiable operation.

The hardware resource prediction module 420 may be a model or a neural network trained through a training process such that a hardware resource prediction value predicted to be needed or used by the architecture of the neural network are output based on the parameters of the architecture of the neural network. However, in addition to the model or the neural network, the hardware resource prediction module 420 may be implemented by other approaches that may predict the hardware resource of the neural network based on the candidate architecture "a" 412.

The computing apparatus may determine a hardware resource loss LHW(a) 442 of the candidate architecture "a" 412 based on the hardware resource measurement value LAT_{M}(a) 436 and the hardware resource prediction value LAT_{P}(a) 422.

The hardware resource loss L_{HW}(a) 442 may be defined such that a difference between a hardware resource measurement value LAT_{M}(a) 436 and a hardware resource prediction value LAT_{P}(a) 422 is minimized.

The hardware resource loss L_{HW}(a) 442 is determined based on L_{HW1}(a) indicating a loss by a difference between the hardware resource measurement value LAT_{M}(a) 436 and the hardware resource prediction value LAT_{P}(a) 422 and L_{HW2}(a) that is a factor for optimizing the hardware resource (e.g., a factor for minimizing latency). L_{HW1}(a) and L_{HW2}(a) is determined by Equations 1 and 2 below, respectively. ${L}_{HW 1} \left(a\right) = {\left({LAT}_{M}\left(a\right)-{LAT}_{P}\left(a\right)\right)}^{2}$ ${L}_{HW 2} \left(a\right) = {\left({LAT}_{M}\left(a\right)\right)}^{2}$

The hardware resource loss L_{HW}(a) 442 is determined as a weighted sum between L_{HW1}(a) and L_{HW2}(a), for example, as represented by Equation 3 below. ${L}_{HW} \left(a\right) = {L}_{HW 1} \left(a\right) + w \times {L}_{HW 2} \left(a\right)$

In Equation 3, w denotes a weight applied to L_{HW2}(a) and may be, for example, a preset constant. In an example, a weight may be applied only to L_{HW1}(a), or different weights may be applied to L_{HW1}(a) and L_{HW2}(a), respectively.

The computing apparatus may determine the hardware resource loss L_{HW}(a) 442 by applying a difference between the hardware resource measurement value LAT_{M}(a) 436 and the hardware resource prediction value LAT_{P}(a) 422 to a loss function. In an example, the loss functions L_{HW} that are described n equations 1-3 may be defined in advance.

The computing apparatus may determine an optimization loss including the neural network loss L_{TASK}(w(a), a) 418 and the hardware resource loss L_{HW}(a) 442 and may determine a target architecture by selecting a target operation that minimizes the optimization loss among candidate operations of each layer included in the neural network of the candidate architecture "a" 412. For example, the target architecture may be determined by searching for parameters w(a) 416 of the candidate architecture "a" 412 and the candidate architecture "a" that minimizes the optimization loss, as represented by Equation 4 below. In the example of Equation 4, an optimization loss may be determined by a weighted sum of the neural network loss L_{TASK}(w(a), a) 418 and a result of weights being applied to the hardware resource loss L_{HW}(a) 442. ${min}_{a} {min}_{w} {L}_{TASK} \left(w\left(a\right),a\right) + λ ⋅ {L}_{HW} \left(a\right)$

The computing apparatus may effectively search for the target architecture of the neural network in a short period of time and may consider the hardware resource needed by the neural network as an optimization constraint when the target architecture is selected. In FIG. 4, a process 410 may have a differentiable characteristic, and the process 430 may have a non-differentiable characteristic. The computing apparatus may maintain differentiability by predicting the hardware resource of the whole neural network based on the operation of each layer of the neural network using the hardware resource prediction module 420. In an example, the hardware resource prediction module 420 may be implemented the neural network. When the differentiability is maintained, end-to-end learning may be performed. In addition, the search process described above may optimize an architecture of the neural network to be differentiable by reflecting the hardware resource constraints of the whole neural network and may use only a short optimization time because the target architecture is found through a single learning process. In addition, forward operation and backward operation consistency may be maintained in the search process of the target architecture.

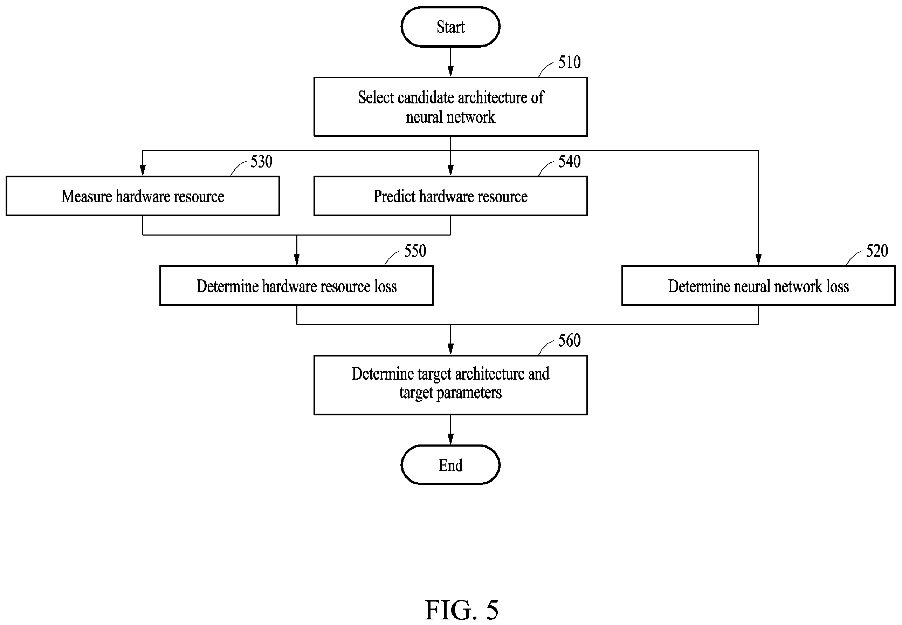

FIG. 5 illustrates an example of operations of a method of searching for an optimal architecture of a neural network. The operations in FIG. 5 may be performed in the sequence and manner as shown, although the order of some operations may be changed or some of the operations omitted. Many of the operations shown in FIG. 5 may be performed in parallel or concurrently. One or more blocks of FIG. 5, and combinations of the blocks, can be implemented by special purpose hardware-based computer, such as a processor, that perform the specified functions, or combinations of special purpose hardware and computer instructions. For example, operations of the method may be performed by a computing apparatus (e.g., the computing apparatus 200 in FIG. 2). In addition to the description of FIG. 5 below, the descriptions of FIGS. 1-4 are also applicable to FIG. 5, and are incorporated herein by reference. Thus, the above description may not be repeated here.

Referring to FIG. 5, in operation 510, the computing apparatus may select a candidate architecture of a neural network (e.g., the basic neural network 120 in FIG. 1). The computing apparatus may select the candidate architecture by selecting any one defined candidate operation among candidate operations for each layer of the neural network.

In operation 520, the computing apparatus may determine a neural network loss based on parameters of the candidate architecture of the neural network. The computing apparatus may learn the candidate architecture of the neural network using training data and may determine the neural network loss. The computing apparatus may determine the neural network loss based on a difference between validation data and result data processed by the neural network. When the difference between the result data output from the neural network of the candidate architecture and targeted verification data increases, the neural network loss may increase.

**In** operation 530, the computing apparatus may measure the physical hardware resource used for operating the neural network of the candidate architecture. The measured hardware resource may include, for example, one or more of power consumption, memory demand, the number of operations, and a processing time when the neural network of the candidate architecture operates, but is not limited thereto.

In operation 540, the computing apparatus may predict the hardware resource that would be needed or used when the neural network of the candidate architecture operates using a hardware resource prediction module (e.g., the hardware resource prediction module 420 in FIG. 4). Information associated with a selected candidate operation including the candidate architecture among candidate operations that may be performed by each layer of the neural network may be input to a hardware resource prediction model, and the hardware resource prediction model may provide a predicted value of a hardware resource that would be needed or used by the corresponding neural network based on input information.

In operation 550, the computing apparatus may determine the hardware resource loss, based on the measured hardware resource and the predicted hardware resource. The computing apparatus may determine the hardware resource loss, based on a difference between the measured hardware resource, and the predicted hardware resource, as well as a loss function. In an example, the loss function may be predefined.

In operation 560, the computing apparatus may determine a target architecture and target parameters of the neural network, based on the neural network loss and the hardware resource loss. The computing apparatus may determine the target architecture and the target parameters that minimize an optimization loss including the neural network loss and the hardware resource loss. The computing apparatus may determine the target architecture by selecting a target operation that minimizes the optimization loss among the candidate operations of each layer included in the neural network of the candidate architecture. The computing apparatus may determine the candidate architecture and the weighted sum of the neural network loss, based on the parameters of the candidate architecture, and the hardware resource loss, based on the parameters of the candidate architecture as the optimization loss, and determine the target architecture that minimizes the optimization loss.

FIG. 6 illustrates an example of an electronic device.

Referring to FIG. 6, an electronic device 600 may be implemented as, or in, various types of computing devices, such as, a personal computer (PC), a data server, or a portable device. In an example, the portable device may be implemented as a laptop computer, a mobile phone, a smart phone, a tablet PC, a mobile internet device (MID), a personal digital assistant (PDA), an enterprise digital assistant (EDA), a digital still camera, a digital video camera, a portable multimedia player (PMP), a personal navigation device or portable navigation device (PND), a handheld game console, an e-book, a smart vehicle, an autonomous vehicle, or a smart device. In an example, the electronic device 600 may be a wearable device, such as, for example, an apparatus for providing augmented reality (AR) (hereinafter simply referred to as an "AR provision device") such as AR glasses, a head mounted display (HMD), a smart watch, and a product inspection device.

The electronic device 600 may include a processor 610, a memory 620, a camera 630, a sensor 640, an output device 650, and a communication device 660. At least some of the components of the electronic device 600 may be coupled mutually and exchange signals (e.g., commands or data) therebetween via an inter-peripheral communication interface 670 (e.g., a bus, a general-purpose input and output (GPIO) interface, a serial peripheral interface (SPI), a mobile industry processor interface (MIPI)).

The processor 610 may be a processing device implemented by hardware including a circuit having a physical structure to perform operations. For example, the operations may be implemented by execution of computer-readable instructions that configure the processing device to perform any one, or any combination, of the operations described.

For example, the hardware-implemented data processing device may include a microprocessor, a central processing unit (CPU), a processor core, a multi-core processor, a multiprocessor, an application-specific integrated circuit (ASIC), and a field-programmable gate array (FPGA). Further details regarding the processor 610is provided below.

The processor 610 may control overall operations of the electronic device 600 and execute functions and instructions to be executed by the electronic device 600. The processor 610 may perform operations of the computing apparatus described above with reference to FIGS. 1 to 5 (e.g., the computing apparatus 200 in FIG. 2).

The memory 620 may store the instructions executable by the processor 610, input/output data, and various neural network parameters. The memory 620 may include a volatile memory and/or a non-volatile memory. The volatile memory device may be implemented as a dynamic random-access memory (DRAM), a static random-access memory (SRAM), a thyristor RAM (T-RAM), a zero capacitor RAM (Z-RAM), or a twin transistor RAM (TTRAM).

The non-volatile memory device may be implemented as an electrically erasable programmable read-only memory (EEPROM), a flash memory, a magnetic RAM (MRAM), a spin-transfer torque (STT)-MRAM, a conductive bridging RAM(CBRAM), a ferroelectric RAM (FeRAM), a phase change RAM (PRAM), a resistive RAM (RRAM), a nanotube RRAM, a polymer RAM (PoRAM), a nano floating gate Memory (NFGM), a holographic memory, a molecular electronic memory device), or an insulator resistance change memory. Further details regarding the memory 620 is provided below.

The camera 630 may capture an image. The camera 630 may obtain, for example, a color image, a black and white image, a gray image, an infrared (IR) image, or a depth image. For example, an image captured by the camera 630 may be used as an input to a convolution layer of the CNN.

The sensor 640 may detect an operational state (e.g., power or temperature) of the electronic device 600 or an environmental state (e.g., a state of a user) external to the electronic device 600 and may generate an electric signal or data value corresponding to the detected state. The sensor 640 may include, for example, a gesture sensor, a gyro sensor, an atmospheric pressure sensor, a magnetic sensor, an acceleration sensor, a grip sensor, a proximity sensor, a color sensor, an IR sensor, a biometric sensor, a temperature sensor, a humidity sensor, or an illuminance sensor. The sensor 640 may include sensors used to measure various resources of the electronic device 600.

The output device 650 may provide an output of the electronic apparatus 600 to a user through a visual, auditory, or tactile channel. The output device 650 may include, for example, a display devices, such as, a liquid crystal display or a light-emitting diode (LED)/organic LED display, a micro-LED, a touch screen, a speaker, a vibration generating device, or any other device that may provide the output to the user. In an example, the output device 650 may also be configured to receive an input from the user, such as, a voice input, a gesture input, or a touch input.

The communication device 660 may be construed to establish a direct (or wired) communication channel or a wireless communication channel between the electronic device 600 and an external electronic device and may support communication through the established communication channel. In an example, the communication device 660 may include a wireless communication module (e.g., a cellular communication module, a short-range wireless communication module, or a global navigation satellite system (GNSS) communication module) or a wired communication module (e.g., a local area network (LAN) communication module, or a power line communication (PLC) module). The wireless communication device may communicate with the external device via a short-range communication network (e.g., Bluetooth^{™}, wireless-fidelity (Wi-Fi) direct, or IR data association (IrDA)) or a long-range communication network (e.g., a legacy cellular network, a 5G network, a next-generation communication network, the Internet, or a computer network (e.g., a LAN or a wide area network (WAN)).

In an example, the electronic device 600 may be an AR provision apparatus (or device) (e.g., AR glasses) using a neural network-based algorithm. The AR provision apparatus may be worn on a face of a user to provide the user with content related to an AR service and/or a virtual reality (VR) service. The processor 610 may perform a processing operation using a trained neural network having the target architecture. The camera 630 may capture an image for generating AR content, and the processor 610 may generate the AR content by processing the image using the neural network having the target architecture. For example, the processor 610 may generate AR content by recognizing an object in the image obtained through the camera 630 and superimposing virtual content on a recognized object area or an area around the object.

The processor 610 may determine the target architecture of the neural network through the same process described with reference to FIGS. 2 and 5. For example, the processor 610 may determine a neural network loss based on parameters for a candidate architecture of the neural network (e.g., the basic neural network 120 in FIG. 1), and when the neural network of the candidate architecture operates, a hardware resource that is needed may be measured. The processor 610 may predict the hardware resource to be needed when the neural network of the candidate architecture operates using a hardware resource prediction module (e.g., the hardware resource prediction module 420 in FIG. 4), predict the measured hardware resource and the predicted hardware resource, and determine a hardware resource loss based on the hardware resource. The processor 610 may determine the target architecture based on the neural network loss and the hardware resource loss. The processor 610 may determine an optimization loss based on a weighted sum of a candidate architecture, the neural network loss based on parameters of the candidate architecture, and the hardware resource loss based on the candidate architecture and may determine the target architecture that minimizes the optimization loss and parameters of the candidate architecture.

The computing apparatus 200, processor 210, processor 610, and other apparatuses, devices, units, modules, and components described herein are implemented by hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, multiple-instruction multiple-data (MIMD) multiprocessing, a controller and an arithmetic logic unit (ALU), a DSP, a microcomputer, an application-specific integrated circuit (ASIC), a field programmable gate array (FPGA), a programmable logic unit (PLU), a central processing unit (CPU), a graphics processing unit (GPU), a neural processing unit (NPU), or any other device capable of responding to and executing instructions in a defined manner.

The methods that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

The Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In an example, the instructions or software includes at least one of an applet, a dynamic link library (DLL), middleware, firmware, a device driver, an application program storing the method for searching for an optimal architecture of a neural network. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), magnetic RAM (MRAM), spin-transfer torque(STT)-MRAM, static random-access memory (SRAM), thyristor RAM (T-RAM), zero capacitor RAM (Z-RAM), twin transistor RAM (TTRAM), conductive bridging RAM(CBRAM), ferroelectric RAM (FeRAM), phase change RAM (PRAM), resistive RAM(RRAM), nanotube RRAM, polymer RAM (PoRAM), nano floating gate Memory(NFGM), holographic memory, molecular electronic memory device), insulator resistance change memory, dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and providing the instructions or software and any associated data, data files, and data structures to a processor or computer so that the processor or computer can execute the instructions. In an example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

## Claims

1. A computing apparatus (100, 200, 600), the apparatus (100, 200, 600) comprising:
a processor (210, 610) configured to:
generate (520) a neural network loss (418) of a task performed by a neural network based on parameters (416) of a candidate architecture (412) for the neural network;
measure (530) first hardware resources (436) used in operation of the neural network with the candidate architecture (412) implemented by the processor (210, 610);
generate (540) a prediction, using a hardware resource prediction model, of second hardware resources (422) that would be used for operating the neural network with the candidate architecture (412) implemented by the processor (210, 610);
determine (550) a hardware resource loss (442) by applying a difference between a measured value of the first hardware resources (436) and a prediction value of the second hardware resources (422) to a defined loss function;
determine (560) a target architecture of the neural network based on the neural network loss (418) and the hardware resource loss (442); and
output the neural network having the determined target architecture based on the task through a training process;
wherein the measured value of the first hardware resources (436) comprises any one or any combination of a
measured power consumption or a memory demand to operate the neural network with the candidate architecture (412).

2. The apparatus (100, 200, 600) of claim 1, wherein the hardware resource prediction model comprises a neural network configured to accept the parameters (416) of the candidate architecture (412) as inputs, to predict the second hardware resource (422) of the neural network of the candidate architecture (412) based on the parameters (416), and to output a hardware resource prediction value (422).

3. The apparatus (100, 200, 600) of claim 1 or 2, wherein the processor (210, 610) is further configured to:
update the parameters (416) of the candidate architecture (412) to minimize the hardware resource loss (442).

4. The apparatus (100, 200, 600) of any of the foregoing claims, wherein the processor (210, 610) is further configured to determine a weighted sum of the neural network loss (418) and the hardware resource loss (442) as an optimization loss and to determine the target architecture to minimize the optimization loss.

5. The apparatus (100, 200, 600) of any of the foregoing claims, wherein the processor (210, 610) is further configured to determine the target architecture and target parameters to reduce the neural network loss (418) and the hardware resource loss (442).

6. The apparatus (100, 200, 600) of any of the foregoing claims, wherein, for each layer (312, 314, 316, 318) of the neural network, a corresponding candidate architecture is determined by selecting a respective candidate operation (322, 324, 326, 328, 329) from among candidate operations of a corresponding layer;
wherein, optionally, information associated with the selected candidate operation is input to the hardware resource prediction model.

7. The apparatus (100, 200, 600) of any of the foregoing claims, wherein the first hardware resources (436) further comprises any one or any combination of a number of operations, and a processing time to operate the neural network with the candidate architecture (412).

8. The apparatus (100, 200, 600) of any of the foregoing claims, wherein the processor (210, 610) is further configured to:
determine an optimization loss comprising the neural network loss (418) and the hardware resource loss (442); and
determine the target architecture by selecting a target operation that minimizes the optimization loss from among candidate operations of each layer (312, 314, 316, 318) comprised in the neural network of the candidate architecture (412), and/or wherein the processor (210) is further configured to determine the neural network loss (418) based on a difference between validation data and result data output by the neural network of the candidate architecture (412) processing training data.

9. A processor-implemented method for searching an optimal architecture of a neural network, the method comprising:
determining (520) a neural network loss (418) of a task performed by a neural network based on parameters (416) of a candidate architecture (412) for the neural network;
measuring (530) a first hardware resource (436) needed to operate the neural network of the candidate architecture (412) implemented by the processor;
predicting (540), using a hardware resource prediction module (420), a second hardware resource (422) needed to operate the neural network of the candidate architecture (412) implemented by the processor;
determining (550) a hardware resource loss (442) by applying a difference between a measured value of the first hardware resource (436) and a prediction value of the second hardware resource (422) to a defined loss function;
determining (560) a target architecture of the neural network based on the neural network loss (418) and the hardware resource loss (442); and
outputting the neural network having the determined target architecture based on the task through a training process;
wherein the measured value of the
first hardware resources (436) comprises any one or any combination of a
measured power consumption or a memory demand to operate the neural network with the candidate architecture (412).

10. The method of claim 9, wherein the hardware resource prediction module (420) comprises a neural network configured to accept the parameters (416) of the candidate architecture (412) as inputs, predict the second hardware resource (422) of the neural network of the candidate architecture (412) based on the parameters (416), and to output a hardware resource prediction value (422).

11. The method of claim 9 or 10, wherein the determining of the target architecture comprises determining the target architecture to minimize a weighted sum of the neural network loss (418) and the hardware resource loss (442).

12. The method of any one of claims 9-11, wherein the determining of the target architecture comprises determining the target architecture by selecting a target operation (322, 324, 326, 328, 329) from among candidate operations of each layer (312, 314, 316, 318) comprised in the neural network of the candidate architecture (412).

13. The method of any one of claims 9-12, wherein the first (436) and second (422) hardware resource comprises any one or any combination of a number of operations, and a processing time to operate the neural network of the candidate architecture (412).

14. The method of any one of claims 9-13, wherein at least one of the following applies:
determining a target architecture of the neural network comprises determining the target architecture of the neural network with a least sum of the neural network loss (418) and a weight applied to the hardware resource loss (442);
generating the hardware resource loss (442) comprises generating the hardware resource loss (442) based on applying a loss function that considers the different between the first hardware resource (436) and the second hardware resource (422);
the candidate architecture comprises a neural network structure including a set of candidate operations for each layer of the neural network.

15. A non-transitory computer-readable storage medium (220, 620) storing instructions that, when executed by a processor (210, 610), cause the processor (210, 610) to perform the method of any one of claims 9-14.

## Patentansprüche

1. Rechenvorrichtung (100, 200, 600), die Vorrichtung (100, 200, 600) umfassend:
einen Prozessor (210, 610), der konfiguriert ist zum:
Erzeugen (520) eines neuronalen Netzwerkverlusts (418) einer Aufgabe, die durch ein neuronales Netzwerk durchgeführt wird, basierend auf Parametern (416) einer Kandidatenarchitektur (412) für das neuronale Netzwerk;
Messen (530) erster Hardware-Ressourcen (436), die bei einem Betrieb des neuronalen Netzwerks mit der Kandidatenarchitektur (412) verwendet werden, die durch den Prozessor (210, 610) implementiert ist;
Erzeugen (540) einer Vorhersage, unter Verwendung eines Hardware-Ressourcenvorhersagemodells, für zweite Hardware-Ressourcen (422), die zum Betreiben des neuronalen Netzwerks mit der Kandidatenarchitektur (412) verwendet würden, die durch den Prozessor (210, 610) implementiert ist;
Bestimmen (550) eines Hardware-Ressourcenverlusts (442) durch Anwenden einer Differenz zwischen einem gemessenen Wert der ersten Hardware-Ressourcen (436) und einem Vorhersagewert der zweiten Hardware-Ressourcen (422) auf eine definierte Verlustfunktion;
Bestimmen (560) einer Zielarchitektur des neuronalen Netzwerks basierend auf dem neuronalen Netzwerkverlust (418) und dem Hardware-Ressourcenverlust (442); und
Ausgeben des neuronalen Netzwerks, das die bestimmte Zielarchitektur aufweist, basierend auf der Aufgabe durch einen Trainingsprozess;
wobei der gemessene Wert der ersten Hardware-Ressourcen (436) eines von oder eine beliebige Kombination aus einem gemessenen Energieverbrauch oder einem Speicherbedarf umfasst, um das neuronale Netzwerk mit der Kandidatenarchitektur (412) zu betreiben.

2. Vorrichtung (100, 200, 600) nach Anspruch 1, wobei das Hardware-Ressourcenvorhersagemodell ein neuronales Netzwerk umfasst, das konfiguriert ist, um die Parameter (416) der Kandidatenarchitektur (412) als Eingaben zu akzeptieren, die zweite Hardware-Ressource (422) des neuronalen Netzwerks der Kandidatenarchitektur (412) basierend auf den Parametern (416) vorherzusagen und einen Hardware-Ressourcenvorhersagewert (422) auszugeben.

3. Vorrichtung (100, 200, 600) nach Anspruch 1 oder 2, wobei der Prozessor (210, 610) ferner konfiguriert ist zum:
Aktualisieren der Parameter (416) der Kandidatenarchitektur (412), um den Hardware-Ressourcenverlust (442) zu minimieren.

4. Vorrichtung (100, 200, 600) nach einem der vorstehenden Ansprüche, wobei der Prozessor (210, 610) ferner konfiguriert ist, um eine gewichtete Summe des neuronalen Netzwerkverlusts (418) und des Hardware-Ressourcenverlusts (442) als einen Optimierungsverlust zu bestimmen und die Zielarchitektur zu bestimmen, um den Optimierungsverlust zu minimieren.

5. Vorrichtung (100, 200, 600) nach einem der vorstehenden Ansprüche, wobei der Prozessor (210, 610) ferner konfiguriert ist, um die Zielarchitektur und Zielparameter zu bestimmen, um den neuronalen Netzwerkverlust (418) und den Hardware-Ressourcenverlust (442) zu reduzieren.

6. Vorrichtung (100, 200, 600) nach einem der vorstehenden Ansprüche, wobei für jede Schicht (312, 314, 316, 318) des neuronalen Netzwerks eine entsprechende Kandidatenarchitektur durch Auswählen eines jeweiligen Kandidatenbetriebs (322, 324, 326, 328, 329) aus Kandidatenbetrieben einer entsprechenden Schicht bestimmt wird;
wobei, optional, Informationen, die mit dem ausgewählten Kandidatenbetrieb verknüpft sind, in das Hardware-Ressourcenvorhersagemodell eingegeben werden.

7. Vorrichtung (100, 200, 600) nach einem der vorstehenden Ansprüche, wobei die ersten Hardware-Ressourcen (436) ferner eines von oder eine beliebige Kombination aus einer Anzahl von Betrieben und einer Verarbeitungszeit umfasst, um das neuronale Netzwerk mit der Kandidatenarchitektur (412) zu betreiben.

8. Vorrichtung (100, 200, 600) nach einem der vorstehenden Ansprüche, wobei der Prozessor (210, 610) ferner konfiguriert ist zum:
Bestimmen eines Optimierungsverlusts, umfassend den neuronalen Netzwerkverlust (418) und den Hardware-Ressourcenverlust (442); und
Bestimmen der Zielarchitektur durch Auswählen eines Zielbetriebs, der den Optimierungsverlust minimiert, aus Kandidatenbetrieben jeder Schicht (312, 314, 316, 318), die in dem neuronalen Netzwerk der Kandidatenarchitektur (412) umfasst ist, und/oder wobei der Prozessor (210) ferner konfiguriert ist, um den neuronalen Netzwerkverlust (418) basierend auf einer Differenz zwischen Validierungsdaten und Ergebnisdaten zu bestimmen, die durch das neuronale Netzwerk der Kandidatenarchitektur (412), das Trainingsdaten verarbeitet, ausgegeben werden.

9. Prozessorimplementiertes Verfahren zum Suchen einer optimalen Architektur eines neuronalen Netzwerks, das Verfahren umfassend:
Bestimmen (520) eines neuronalen Netzwerkverlusts (418) einer Aufgabe, die durch ein neuronales Netzwerk durchgeführt wird, basierend auf Parametern (416) einer Kandidatenarchitektur (412) für das neuronale Netzwerk;
Messen (530) einer ersten Hardware-Ressource (436), die benötigt wird, um das neuronale Netzwerk der Kandidatenarchitektur (412) zu betreiben, die durch den Prozessor implementiert wird;
Vorhersagen (540), unter Verwendung eines Hardware-Ressourcenvorhersagemoduls (420), einer zweiten Hardware-Ressource (422), die benötigt wird, um das neuronale Netzwerk der Kandidatenarchitektur (412) zu betreiben, die durch den Prozessor implementiert wird;
Bestimmen (550) eines Hardware-Ressourcenverlusts (442) durch Anwenden einer Differenz zwischen einem gemessenen Wert der ersten Hardware-Ressource (436) und einem Vorhersagewert der zweiten Hardware-Ressource (422) auf eine definierte Verlustfunktion;
Bestimmen (560) einer Zielarchitektur des neuronalen Netzwerks basierend auf dem neuronalen Netzwerkverlust (418) und dem Hardware-Ressourcenverlust (442); und
Ausgeben des neuronalen Netzwerks, das die bestimmte Zielarchitektur aufweist, basierend auf der Aufgabe durch einen Trainingsprozess;
wobei der gemessene Wert der ersten Hardware-Ressourcen (436) eines von oder eine beliebige Kombination aus einem gemessenen Energieverbrauch oder einem Speicherbedarf umfasst, um das neuronale Netzwerk mit der Kandidatenarchitektur (412) zu betreiben.

10. Verfahren nach Anspruch 9, wobei das Hardware-Ressourcenvorhersagemodul (420) ein neuronales Netzwerk umfasst, das konfiguriert ist, um die Parameter (416) der Kandidatenarchitektur (412) als Eingaben zu akzeptieren, die zweite Hardware-Ressource (422) des neuronalen Netzwerks der Kandidatenarchitektur (412) basierend auf den Parametern (416) vorherzusagen und einen Hardware-Ressourcenvorhersagewert (422) auszugeben.

11. Verfahren nach Anspruch 9 oder 10, wobei das Bestimmen der Zielarchitektur das Bestimmen der Zielarchitektur umfasst, um eine gewichtete Summe des neuronalen Netzwerkverlusts (418) und des Hardware-Ressourcenverlusts (442) zu minimieren.

12. Verfahren nach einem der Ansprüche 9 bis 11, wobei das Bestimmen der Zielarchitektur das Bestimmen der Zielarchitektur durch Auswählen eines Zielbetriebs (322, 324, 326, 328, 329) aus Kandidatenbetrieben jeder Schicht (312, 314, 316, 318) umfasst, die in dem neuronalen Netzwerk der Kandidatenarchitektur (412) umfasst ist.

13. Verfahren nach einem der Ansprüche 9 bis 12, wobei die erste (436) und zweite (422) Hardware-Ressource eines von oder eine beliebige Kombination aus einer Anzahl von Betrieben und einer Verarbeitungszeit umfasst, um das neuronale Netzwerk der Kandidatenarchitektur (412) zu betreiben.

14. Verfahren nach einem der Ansprüche 9 bis 13, wobei mindestens eines der Folgenden zutrifft:
Bestimmen einer Zielarchitektur des neuronalen Netzwerks umfasst das Bestimmen der Zielarchitektur des neuronalen Netzwerks mit einer kleinsten Summe aus dem neuronalen Netzwerkverlust (418) und einem Gewicht, das auf den Hardware-Ressourcenverlust (442) angewendet wird;
Erzeugen des Hardware-Ressourcenverlusts (442) umfasst das Erzeugen des Hardware-Ressourcenverlusts (442) basierend auf dem Anwenden einer Verlustfunktion, die die Differenz zwischen der ersten Hardware-Ressource (436) und der zweiten Hardware-Ressource (422) berücksichtigt;
die Kandidatenarchitektur umfasst eine neuronale Netzwerkstruktur, die einen Satz von Kandidatenbetrieben für jede Schicht des neuronalen Netzwerks einschließt.

15. Nichtflüchtiges computerlesbares Speichermedium (220, 620), das Anweisungen speichert, die, wenn sie durch einen Prozessor (210, 610) ausgeführt werden, bewirken, dass der Prozessor (210, 610) das Verfahren nach einem der Ansprüche 9 bis 14 durchführt.

## Revendications

1. Appareil (100, 200, 600) informatique, l'appareil (100, 200, 600) comprenant :
un processeur (210, 610) configuré pour :
générer (520) une perte de réseau neuronal (418) d'une tâche réalisée par un réseau neuronal sur la base de paramètres (416) d'une architecture candidate (412) pour le réseau neuronal ;
mesurer (530) des premières ressources matérielles (436) utilisées lors du fonctionnement du réseau neuronal avec l'architecture candidate (412) mise en œuvre par le processeur (210, 610) ;
générer (540) une prédiction, à l'aide d'un modèle de prédiction de ressources matérielles, de secondes ressources matérielles (422) qui seraient utilisées lors du fonctionnement du réseau neuronal avec l'architecture candidate (412) mise en œuvre par le processeur (210, 610) ;
déterminer (550) une perte de ressources matérielles (442) en appliquant une différence entre une valeur mesurée des premières ressources matérielles (436) et une valeur de prédiction des secondes ressources matérielles (422) à une fonction de perte définie ;
déterminer (560) une architecture cible du réseau neuronal sur la base de la perte de réseau neuronal (418) et de la perte de ressources matérielles (442) ; et
délivrer le réseau neuronal ayant l'architecture cible déterminée sur la base de la tâche par le biais d'un processus d'entraînement ;
dans lequel la valeur mesurée des premières ressources matérielles (436) comprend l'une quelconque parmi ou une quelconque combinaison d'une consommation d'énergie mesurée ou d'une demande de mémoire pour faire fonctionner le réseau neuronal avec l'architecture candidate (412).

2. Appareil (100, 200, 600) selon la revendication **1,** dans lequel le modèle de prédiction de ressources matérielles comprend un réseau neuronal configuré pour accepter les paramètres (416) de l'architecture candidate (412) en tant qu'entrées, pour prédire la seconde ressource matérielle (422) du réseau neuronal de l'architecture candidate (412) sur la base des paramètres (416), et pour délivrer une valeur de prédiction de ressources matérielles (422).

3. Appareil (100, 200, 600) selon la revendication 1 ou 2, dans lequel le processeur (210, 610) est en outre configuré pour :
mettre à jour les paramètres (416) de l'architecture candidate (412) pour réduire au minimum la perte de ressources matérielles (442).

4. Appareil (100, 200, 600) selon l'une quelconque des revendications précédentes, dans lequel le processeur (210, 610) est en outre configuré pour déterminer une somme pondérée de la perte de réseau neuronal (418) et de la perte de ressources matérielles (442) en tant que perte d'optimisation et pour déterminer l'architecture cible afin de réduire au minimum la perte d'optimisation.

5. Appareil (100, 200, 600) selon l'une quelconque des revendications précédentes, dans lequel le processeur (210, 610) est en outre configuré pour déterminer l'architecture cible et des paramètres cibles pour réduire la perte de réseau neuronal (418) et la perte de ressources matérielles (442).

6. Appareil (100, 200, 600) selon l'une quelconque des revendications précédentes, dans lequel, pour chaque couche (312, 314, 316, 318) du réseau neuronal, une architecture candidate correspondante est déterminée en sélectionnant une opération candidate respective (322, 324, 326, 328, 329) parmi des opérations candidates d'une couche correspondante ;
dans lequel, éventuellement, des informations associées à l'opération candidate sélectionnée sont entrées dans le modèle de prédiction de ressources matérielles.

7. Appareil (100, 200, 600) selon l'une quelconque des revendications précédentes, dans lequel les premières ressources matérielles (436) comprennent en outre l'un quelconque parmi ou l'une quelconque combinaison d'un nombre d'opérations, et d'un temps de traitement pour faire fonctionner le réseau neuronal avec l'architecture candidate (412).

8. Appareil (100, 200, 600) selon l'une quelconque des revendications précédentes, dans lequel le processeur (210, 610) est en outre configuré pour :
déterminer une perte d'optimisation comprenant la perte de réseau neuronal (418) et la perte de ressources matérielles (442) ; et
déterminer l'architecture cible en sélectionnant une opération cible qui réduit au minimum la perte d'optimisation parmi des opérations candidates de chaque couche (312, 314, 316, 318) comprise dans le réseau neuronal de l'architecture candidate (412), et/ou dans lequel le processeur (210) est en outre configuré pour déterminer la perte de réseau neuronal (418) sur la base d'une différence entre des données de validation et des données de résultat délivrées par le réseau neuronal de l'architecture candidate (412) traitant des données d'entraînement.

9. Procédé mis en œuvre par un processeur pour rechercher une architecture optimale d'un réseau neuronal, le procédé comprenant :
la détermination (520) d'une perte de réseau neuronal (418) d'une tâche réalisée par un réseau neuronal sur la base de paramètres (416) d'une architecture candidate (412) pour le réseau neuronal ;
la mesure (530) d'une première ressource matérielle (436) nécessaire pour faire fonctionner le réseau neuronal de l'architecture candidate (412) mise en œuvre par le processeur ;
la prédiction (540), à l'aide d'un module de prédiction de ressources matérielles (420), d'une seconde ressource matérielle (422) nécessaire pour faire fonctionner le réseau neuronal de l'architecture candidate (412) mise en œuvre par le processeur ;
la détermination (550) d'une perte de ressources matérielles (442) en appliquant une différence entre une valeur mesurée de la première ressource matérielle (436) et une valeur de prédiction de la seconde ressource matérielle (422) à une fonction de perte définie ;
la détermination (560) d'une architecture cible du réseau neuronal sur la base de la perte de réseau neuronal (418) et de la perte de ressources matérielles (442) ; et
le fait de délivrer le réseau neuronal ayant l'architecture cible déterminée sur la base de la tâche par le biais d'un processus d'entraînement ;
dans lequel la valeur mesurée des premières ressources matérielles (436) comprend l'une quelconque parmi ou une quelconque combinaison d'une consommation d'énergie mesurée ou d'une demande de mémoire pour faire fonctionner le réseau neuronal avec l'architecture candidate (412).

10. Procédé selon la revendication 9, dans lequel le module de prédiction de ressources matérielles (420) comprend un réseau neuronal configuré pour accepter les paramètres (416) de l'architecture candidate (412) en tant qu'entrées, prédire la seconde ressource matérielle (422) du réseau neuronal de l'architecture candidate (412) sur la base des paramètres (416), et pour délivrer une valeur de prédiction de ressources matérielles (422).

11. Procédé selon la revendication 9 ou 10, dans lequel la détermination de l'architecture cible comprend la détermination de l'architecture cible pour réduire au minimum une somme pondérée de la perte de réseau neuronal (418) et de la perte de ressources matérielles (442).

12. Procédé selon l'une quelconque des revendications 9 à 11, dans lequel la détermination de l'architecture cible comprend la détermination de l'architecture cible en sélectionnant une opération cible (322, 324, 326, 328, 329) parmi des opérations candidates de chaque couche (312, 314, 316, 318) comprise dans le réseau neuronal de l'architecture candidate (412).

13. Procédé selon l'une quelconque des revendications 9 à 12, dans lequel la première (436) et la seconde (422) ressource matérielle comprennent l'un quelconque parmi ou une quelconque combinaison d'un nombre d'opérations, et d'un temps de traitement pour faire fonctionner le réseau neuronal de l'architecture candidate (412).

14. Procédé selon l'une quelconque de revendications 9 à 13, dans lequel au moins l'une parmi les conditions suivantes s'applique :
la détermination d'une architecture cible du réseau neuronal comprend la détermination de l'architecture cible du réseau neuronal avec une somme la plus faible de la perte de réseau neuronal (418) et d'une pondération appliquée à la perte de ressources matérielles (442) ;
la génération de la perte de ressources matérielles (442) comprend la génération de la perte de ressources matérielles (442) sur la base de l'application d'une fonction de perte qui tient compte de la différence entre la première ressource matérielle (436) et la seconde ressource matérielle (422) ;
l'architecture candidate comprend une structure de réseau neuronal comportant un ensemble d'opérations candidates pour chaque couche du réseau neuronal.

15. Support de stockage non transitoire lisible par ordinateur (220, 620) stockant des instructions qui, lorsqu'elles sont exécutées par un processeur (210, 610), amènent le processeur (210, 610) à réaliser le procédé selon l'une quelconque des revendications 9 à 14.
